Europäisches Patentamt

**European Patent Office**

Office européen des brevets

(11) Veröffentlichungsnummer: **0 035 577**
**A1**

(12) **EUROPÄISCHE PATENTANMELDUNG**

(21) Anmeldenummer: **79102403.7**

(22) Anmeldetag: **12.07.79**

(51) Int. Cl.³: **B 62 D 25/18**

(30) Priorität: **16.02.79 DE 2906545**

(43) Veröffentlichungstag der Anmeldung:
**16.09.81 Patentblatt 81/37**

(84) Benannte Vertragsstaaten:
**AT BE CH FR GB IT LU NL SE**

(71) Anmelder: **Arenhold, Knut**
**Westend 7**
**D-2000 Hamburg 52(DE)**

(72) Erfinder: **Arenhold, Knut**
**Westend 7**
**D-2000 Hamburg 52(DE)**

(74) Vertreter: **Uexküll & Stolberg Patentanwälte**
**Beselerstrasse 4**
**D-2000 Hamburg 52(DE)**

(54) Schmutzfängerlappen.

(57) Ein Schmutzfängerlappen aus flexiblem Material zur Befestigung am Karosseriefalz eines Kraftfahrzeuges hat einen Lappenhauptkörper (1) und einen an diesen nach oben anschließenden Anpassungsansatz (2), dessen karosserieseitige Kante annähernd Paralbelform hat.

./...

EP 0 035 577 A1

1

## Beschreibung

Die Erfindung bezieht sich auf einen Schmutzfängerlappen aus biegsamem Material für Kraftfahrzeuge, mit einem im wesentlichen senkrechte Innen- und Außenkanten und eine im wesentlichen horizontale Unterkante aufweisenden Lappenhauptkörper und einem sich an diesen nach oben anschließenden Anpassungsansatz zur Anpassung des Lappens an den Karosserieverlauf, wobei die Oberkante des Lappenhauptkörpers in die bogenförmig von innen nach außen verlaufende Innenkante des Anpassungsansatzes übergeht, deren Krümmungsradius in dem an die Oberkante des Lappenhauptkörpers anschließenden Bereich kleiner ist als im oberen Endbereich, und wobei die Oberkante des Lappenhauptkörpers zumindest im sich an die Innenkante des Anpassungsansatzes anschließenden Bereich horizontal verläuft.

Derartige Schmutzfängerlappen, die es in unterschiedlichen Formen und Dimensionierungen gibt, werden zur Befestigung mit dem an die Innenkante des Anpassungsansatzes anschließenden Bereich an den Kotflügelfalz eines Kraftfahrzeuges gelegt und dann im allgemeinen mittels den Kotflügelfalz und Lappenbereiche umgreifender, beispielsweise U-förmiger Befestigungsklemmen montiert. Dabei ist es auch bereits bekannt (DE-PS 23 42 365), im Bereich der Innenkante des Anpassungsansatzes zusätzlich ein verbiegbares Verstärkungsblech vorzusehen.

Ein Hauptproblem bei allen diesen Schmutzfängerlappen besteht darin, daß sie möglichst so geformt und dimensioniert sein sollten, daß sie sich für im wesentlichen alle zur Zeit auf dem Markt befindlichen Personenkraftfahrzeuge eignen, und zwar vorzugsweise sowohl als Hinterrad- als auch als Vorderradschmutzfängerlappen. Eine derartige Eignung ist jedoch bei den bisher bekannten Schmutzfängerlappen nicht gegeben, und zwar insbesondere weil unterschiedlich geformte Kotflügelfalze eine Anlage an unterschiedlich hoch liegenden Innenkantenbereichen des Anpassungsansatzes erfordern, um überhaupt eine Montage zu ermöglichen. Durch sehr unterschiedlich hoch liegenden Befestigungsstellen wird jedoch der Schmutzfängerlappen infolge des gekrümmten Verlaufes der Innenkante auch seitlich verlagert, d. h. der Lappenhauptkörper deckt den weiter innen am Kraftfahrzeug liegenden Bereich des Rades nicht vollständig ab oder die Außenkante des Lappenhauptkörpers ragt zu wenig seitlich über die Karosserie nach außen.

Eine weitere Schwierigkeit infolge der unterschiedlich liegenden Befestigungsstellen besteht bei den bekannten Schmutzfängerlappen darin, daß es vorkommen kann, daß der Schmutzfängerlappen nicht bei allen Kraftfahrzeugtypen zu einer vollständigen Abdeckung im Bereich der Oberkante des Lappenhauptkörpers führt, d. h. in diesem Bereich ergibt sich zwischen Karosserie und Lappenhauptkörper ein von außen sichtbares "Loch" oder aber die Oberkante des Lappenhauptkörpers liegt auf einer solchen Höhe, daß sie in Berührung mit in diesem Bereich verlaufenden Teilen des Kraftfahrzeuges kommt, was die Montage erschwert oder gar unmöglich macht.

Es ist daher Aufgabe der Erfindung, einen Schmutzfängerlappen zu schaffen, der sich im wesentlichen an alle zur Zeit auf dem Markt befindlichen Personenkraftwagen anpassen läßt und trotzdem immer mit seinem Lappenhauptkörper die gesamte Radbreite abdeckt sowie ausreichend, jedoch nicht zu weit seitlich über die Karosserie vorsteht, um Verschmutzungen in dem äußeren Karosseriebereich zu vermeiden, sowie einen an den jeweiligen Fahrzeugtyp angepaßten, ästhetischen Gesamteindruck ergibt, und bei dem darüber hinaus bei der Montage weder im Bereich der Innenkante des Anpassungsansatzes noch im Bereich der Oberkante des Lappenhauptkörpers von außen sichtbare "Löcher" entstehen oder die Montage behindert wird.

Zur Lösung dieser Aufgabe wird ein Schmutzfängerlappen der eingangs erwähnten Art erfindungsgemäß derart ausgestaltet, daß die Innenkante des Anpassungsansatzes im wesentlichen entsprechend einer Parabel mit einem Halbparameter $p = 3,5$ bis $p = 4,0$, vorzugsweise $p = 3,8$ gekrümmt ist, deren y-Achse senkrecht verläuft und deren Scheitel im Bereich der Oberkante des Lappenhauptkörpers liegt, so daß der Abstand zwischen dem Scheitel und der Innenkante des Lappenhauptkörpers etwa 0,3 bis 0,4 der Breite des Lappenhauptkörpers beträgt, und daß die Breite des Lappenhauptkörpers 20 cm bis 23 cm und die Höhe des Anpassungsansatzes mindestens 12 cm beträgt, wobei die Höhe des Anpassungsansatzes vorzugsweise 15 cm bis 18 cm beträgt, während die Höhe des Lappenhauptkörpers 15 cm bis 18 cm betragen kann.

Überraschenderweise hat sich gezeigt, daß ein derartiger Schmutzfängerlappen einerseits wegen der gewählten Krümmung der Innenkante des Anpassungsansatzes und andererseits wegen der Lage dieser Innenkante bezüglich des Lappenhauptkörpers sowie der Dimensionierung von Lappenhauptkörper und Anpassungsansatz für praktisch alle zur Zeit auf dem Markt befindlichen Personenkraftfahrzeuge geeignet ist und sich in senkrechter Ausrichtung unter voller Abdeckung der Breite des Rades montieren läßt, ohne daß bei dieser Montage "Löcher" auftreten.

Die Erfindung wird im folgenden anhand der eine Draufsicht auf ein Ausführungsbeispiel eines erfindungsgemäßen Schmutzfängers zeigenden Figur näher erläutert.

Der dargestellte Schmutzfängerlappen hat einen Lappenhauptkörper 1 mit einer horizontalen Unterkante 5, einer senkrechten Innenkante 4 und einer senkrechten Außenkante 3, die in die Außenkante des sich an den Lappenhauptkörper 1 anschließenden Anpassungsansatzes 2 übergeht.

Es sei darauf hingewiesen, daß die in dem dargestellten Ausführungsbeispiel geradlinig ausgebildeten Kanten 3, 4, 5 selbstverständlich auch geringfügig nach außen gekrümmt bzw. ballig ausgebildet sein können.

Die Innenkante 7 des Anpassungsansatzes verläuft im wesentlichen entsprechend einer Parabel mit dem Halbparameter p = 3,8, die im oberen Endbereich der Innenkante strichpunktiert dargestellt ist, also geringfügig vom Verlauf der Innenkante 7 abweicht, während der Scheitel 8 der Parabel auf einer Linie mit der horizontal und damit parallel zur Unterkante 5 verlaufenden Oberkante 6 des Lappenhauptkörpers 1 liegt. Die y-Achse dieser Parabel verläuft, wie dargestellt senkrecht, so daß die ebenfalls gezeigte x-Achse mit der Oberkante 6 fluchtet.

In dem dargestellten Ausführungsbeispiel beträgt der Abstand des Scheitels 8 von der Innenkante 4 des Lappenhauptkörpers 1 0,35 der Breite des Lappenhauptkörpers, liegt also bei einer Breite des Lappenhauptkörpers von beispielsweise 21,5 cm etwa 7,5 cm entfernt von der Innenkante 4. Die Höhe des Lappenhauptkörpers beträgt bei dem gezeigten Schmutzfänger etwa 16 cm und die Höhe des Anpassungsansatzes, also der Abstand zwischen der Verlängerung der Oberkante 6 nach rechts und dem oberen Ende des Anpassungsansatzes etwa 17 cm.

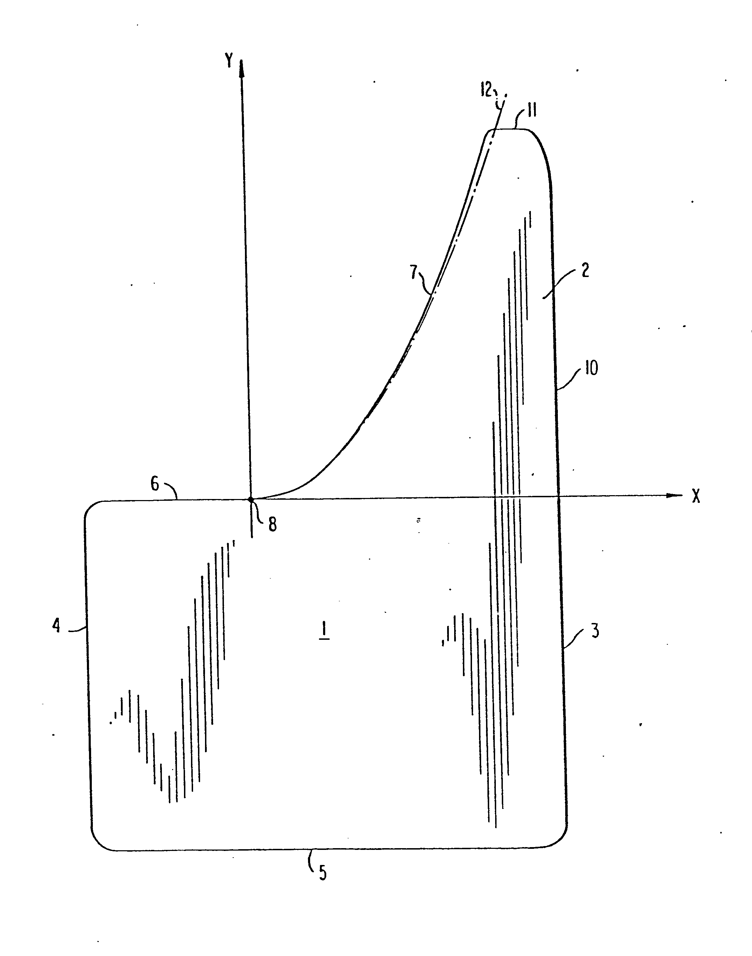

Patentansprüche

1. Schmutzfängerlappen aus biegsamem Material für Kraftfahrzeuge, mit einem im wesentlichen senkrechte Innen- und Außenkanten und eine im wesentlichen horizontale Unterkante aufweisenden Lappenhauptkörper und einem sich an diesen nach oben anschließenden Anpassungsansatz zur Anpassung des Lappens an den Karosserieverlauf, wobei die Oberkante des Lappenhauptkörpers in die bogenförmig von innen nach außen verlaufende Innenkante des Anpassungsansatzes übergeht, deren Krümmungsradius in dem an die Oberkante des Lappenhauptkörpers anschließenden Bereich kleiner ist als im oberen Endbereich, und wobei die Oberkante des Lappenhauptkörpers zumindest im sich an die Innenkante des Anpassungsansatzes anschließenden Bereich horizontal verläuft, dadurch gekennzeichnet, daß die Innenkante (7) des Anpassungsansatzes (2) im wesentlichen entsprechend einer Parabel mit einem Halbparameter $p = 3,5$ bis $p = 4,0$, vorzugsweise $p = 3,8$ gekrümmt ist, deren y-Achse senkrecht verläuft und deren Scheitel (8) im Bereich der Oberkante (6) des Lappenhauptkörpers (1) liegt, so daß der Abstand zwischen dem Scheitel (8) und der Innenkante (4) des Lappenhauptkörpers (1) etwa 0,3 bis 0,4 der Breite des Lappenhauptkörpers (1) beträgt, und daß die Breite des Lappenhauptkörpers (1) 20 cm bis 23 cm und die Höhe des Anpassungsansatzes (2) mindestens 12 cm beträgt.

2.   Schmutzfängerlappen nach Anspruch 1, dadurch gekennzeichnet, daß die Höhe des Anpassungsansatzes 15 cm bis 18 cm beträgt.

3.   Schmutzfängerlappen nach Anspruch 1 oder 2, dadurch gekennzeichnet, daß die Höhe des Lappenhauptkörpers (1) 15 cm bis 18 cm beträgt.

su/be

**Europäisches Patentamt**

# EUROPÄISCHER RECHERCHENBERICHT

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| A | DE - A - 1 962 863 (PARLATEX) | |
| | -- | |
| D | DE - C3 - 2 342 365 (ARENHOLD) | |
| | ---- | |

**KLASSIFIKATION DER ANMELDUNG (Int.Cl.3)**

B 62 D 25/18

**RECHERCHIERTE SACHGEBIETE (Int. Cl.3)**

B 62 D 25/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 29-11-1979 | LUDWIG |

EPA form 1503.1   06.78